# EUROPEAN PATENT APPLICATION

(11) **EP 3 160 212 A1**
(43) Date of publication of application: **26.04.2017**
(21) Application number: 14895032.2
(22) Date of filing: 24.09.2014
(51) Int. Cl.: H04W 88/08

(54) **METHOD, APPARATUS AND SYSTEM FOR MANAGING MOBILE HOTSPOT**

(30) Priority: 17.06.2014 CN 201410271498
(71) Applicant: ZTE Corporation, Shenzhen, Guangdong 518057 (CN)
(72) Inventor: TONG, Xiaoyan, Shenzhen Guangdong 518057 (CN)
(74) Representative: Schröer, Gernot H.
(86) International application number: PCT/CN2014/087334
(87) International publication number: WO 2015/192523

(57) **Abstract**

Provided are a method and an apparatus for managing a mobile hotspot. The method includes: a mobile hotspot device a mobile terminal establishing a first connection, herein the first connection is used as a control channel for remote control message interaction between the mobile hotspot device and the mobile terminal; the mobile terminal sending a remote control request message by using the first connection; and the mobile hotspot device receiving the remote control request message through the first connection, making a response to the remote control request message and performing corresponding turning-on and turning-off processing to the mobile hotspot device according to the remote control request message.

## Description

### Technical Field

The present invention relates to the field of mobile communication, in particular to a method, an apparatus and a system for managing a mobile hotspot.

### Background of the Related Art

In a process of implementing the technical solution of the embodiment of the present application, the inventor of the present application at least finds that the related art has the following technical problems:
A mobile hotspot device is a mobile data terminal which in an uplink surfs the Internet through connection to a mobile communication network of 4G/3G/2G (Fourth/Third/Second Generation) mobile communic8ation technologies and the like, and in a downlink supports local wireless connection to a WLAN (Wireless Local Area Network) and the like. Other mobile terminals such as mobile phones, tablet computers or notebook computers which enable local WLAN connection can surf the Internet through the mobile hotspot device.

At nowadays when the mobile internet develops quickly, mobile smart terminals and tablet computers become main mobile terminals for surfing the Internet. As a portable mobile data terminal, the mobile hotspot device is more often and cooperatively used with the mobile smart terminals and the tablet computers. By taking a tablet computer as an example, in a process of cooperatively using the mobile hotspot device, the mobile hotspot device needs to be taken out firstly, then the mobile hotspot device is turned on or off by adopting a control method of pressing physical keys on the mobile hotspot device, and the mobile hotspot device is pulled out and put back when the mobile hotspot device is not used. By adopting such a control method, a user needs to frequently take out, plug, unplug and put back to turn on and off the mobile hotspot device, and consequently the user experience is greatly reduced.

When the mobile hotspot device works, an uplink 4G/3G/2G wireless connection and a downlink WLAN wireless connection work simultaneously, the power consumption is great, the mobile hotspot device and the mobile terminal using the hotspot have no interaction, the mobile hotspot device must be always in a working state for a long time and the endurance time of the mobile hotspot device is greatly decreased.

To sum up, the prior art has the following problems: 1) the control method is troublesome, consequently the mobile hotspot device needs to be frequently and manually taken out and put back in case of frequent use, and the mobile hotspot device needs to be turned on and off through physical keys; and 2) the mobile hotspot device and the mobile terminal using the hotspot have no interaction, i.e., upload and download operations do not exist, the mobile hotspot device will also be always in the working state, the power consumption is great and the endurance is influenced.

However, the related art does not have effective solutions to the above-mentioned problems.

### Summary of the Invention

In view of this, the embodiments of the present invention expect to provide a method, an apparatus and a system for managing a mobile hotspot, which can remotely turn on and off a mobile hotspot device and avoid the situation that a user needs to frequently and manually take out and put back the mobile hotspot device in case of fragmented frequent use.

The technical solutions of the embodiments of the present invention are implemented as follows:
The embodiment of the present invention provides a method for managing a mobile hotspot, including: establishing a first connection, herein the first connection is used as a control channel for remote control message interaction between a mobile hotspot device and a mobile terminal; and receiving a remote control request message through the first connection, making a response to the remote control request message and performing corresponding turning-on and turning-off processing to the mobile hotspot device according to the remote control request message.

In the above-mentioned solution, the method further includes: acquiring a device state of the mobile hotspot device; acquiring device state information of the mobile hotspot device according to the device state; and broadcasting the device state information by using the first connection.

In the above-mentioned solution, acquiring the device state information of the mobile hotspot device according to the device state includes: when the device state is a working state, acquiring the device state information on line; and when the device state is a turned-off state, locally acquiring the stored device state information.

In the above-mentioned solution, the remote control request message includes: a hotspot turning-on request and a hotspot turning-off request; and correspondingly, performing turning-on and turning-off processing to the mobile hotspot device according to the remote control request message includes: when the remote control request message is the hotspot turning-on request, resetting the mobile hotspot device to turn on a hotspot function and returning a turning-on success response; and when the remote control request message is the hotspot turning-off request, turning off the mobile hotspot device to turn off the hotspot function and returning a turning-off success response.

In the above-mentioned solution, the remote control request message further includes: a second connection establishment request and a second connection cutoff request; and correspondingly, the method further includes: when the remote control request message is the second connection establishment request, establishing a second connection; and when the remote control request message is the second connection cutoff request, cutting off the second connection, herein the second connection and the first connection are different connections and the second connection is used as a data channel for data uploading or downloading between the mobile hotspot device and the mobile terminal.

The embodiment of the present invention further provides a method for managing a mobile hotspot, including: establishing a first connection, herein the first connection is used as a control channel for remote control message interaction between a mobile terminal and a mobile hotspot device; and sending a remote control request message by using the first connection, herein the remote control request message is used for performing turning-on and turning-off processing control to the mobile hotspot device.

In the above-mentioned solution, the method further includes: monitoring device state information of the mobile hotspot device by using the first connection and displaying the monitored device state information after monitoring succeeds.

In the above-mentioned solution, the method further includes: triggering the remote control request message according to a triggering policy, herein the remote control request message includes: a hotspot turning-on request and a hotspot turning-off request.

In the above-mentioned solution, the remote control request further includes a second connection establishment request used for establishing a second connection and a second connection cutoff request used for cutting off the second connection, herein the second connection and the first connection are different connections and the second connection is used as a data channel for data uploading or downloading between the mobile hotspot device and the mobile terminal.

The embodiment of the present invention further provides a method for managing a mobile hotspot, including: a mobile hotspot device and a mobile terminal establishing a first connection, herein the first connection is used as a control channel for remote control message interaction between the mobile hotspot device and the mobile terminal; the mobile terminal sending a remote control request message by using the first connection, herein the remote control request message is used for performing turning-on and turning-off processing control to the mobile hotspot device; and the mobile hotspot device receiving the remote control request message through the first connection, making a response to the remote control request message and performing corresponding turning-on and turning-off processing to the mobile hotspot device according to the remote control request message.

The embodiment of the present invention further provides an apparatus for managing a mobile hotspot, including: a first connection module and a processing module, herein the first connection module is arranged to establish a first connection, herein the first connection is used as a control channel for remote control message interaction between a mobile hotspot device and a mobile terminal; and the processing module is arranged to receive a remote control request message through the first connection, make a response to the remote control request message and perform corresponding turning-on and turning-off processing to the mobile hotspot device according to the remote control request message.

In the above-mentioned solution, the apparatus further includes: a broadcasting module arranged to acquire a device state of the mobile hotspot device; acquire device state information of the mobile hotspot device according to the device state; and broadcast the device state information by using the first connection.

In the above-mentioned solution, the broadcasting module is specifically arranged to: when the device state is a working state, acquire the device state information on line; and when the device state is a turned-off state, locally acquire the stored device state information.

In the above-mentioned solution, the remote control request message includes: a hotspot turning-on request and a hotspot turning-off request; and correspondingly, the processing module is specifically arranged to, when the remote control request message is the hotspot turning-on request, reset the mobile hotspot device to turn on a hotspot function and return a turning-on success response; and when the remote control request message is the hotspot turning-off request, turn off the hotspot function of the mobile hotspot device and return a turning-off success response.

In the above-mentioned solution, the remote control request message includes: a second connection establishment request and a second connection cutoff request; and correspondingly, the apparatus further includes: a data connection module arranged to, when the remote control request message is the second connection establishment request, establish a second connection; and when the remote control request message is the second connection cutoff request, cut off the second connection, herein the second connection and the first connection are different connections and the second connection is used as a data channel for data uploading or downloading between the mobile hotspot device and the mobile terminal.

The first connection module, the processing module, the broadcasting module and the data connection module may be implemented during processing execution by adopting a Central Processing Unit (CPU), a Digital Signal Processor (DSP) or a Field Programmable Gate Array (FPGA).

The embodiment of the present invention further provides an apparatus for managing a mobile hotspot, including: a first connection management module and a sending module, herein the first connection management module is arranged to establish a first connection, herein the first connection is used as a control channel for remote control message interaction between a mobile terminal and a mobile hotspot device; and the sending module is arranged to send a remote control request message by using the first connection, herein the remote control request message is used for performing turning-on and turning-off processing control to the mobile hotspot device.

In the above-mentioned solution, the apparatus further includes: a monitoring module arranged to monitor device state information of the mobile hotspot device by using the first connection and display the monitored device state information after monitoring succeeds.

In the above-mentioned solution, the apparatus further includes: a triggering module arranged to trigger the remote control request message according to a triggering policy, herein the remote control request message includes: a hotspot turning-on request and a hotspot turning-off request.

In the above-mentioned solution, the triggering module is further arranged to trigger a second connection establishment request used for establishing a second connection and a second connection cutoff request used for cutting off the second connection, herein the second connection and the first connection are different connections and the second connection is used as a data channel for data uploading or downloading between the mobile hotspot device and the mobile terminal.

The first connection management module, the sending module, the monitoring module and the triggering module may be implemented during processing execution by adopting a Central Processing Unit (CPU), a Digital Signal Processor (DSP) or a Field Programmable Gate Array (FPGA).

The embodiment of the present invention further provides system for managing a mobile hotspot, including a mobile terminal and a mobile hotspot device, herein the mobile terminal is arranged to establish a first connection with the mobile hotspot device and send a remote control request message by using the first connection, herein the remote control request message is used for performing turning-on and turning-off processing control to the mobile hotspot device; and the mobile hotspot device is arranged to establish the first connection with the mobile terminal, receive the remote control request message through the first connection, make a response to the remote control request message and perform corresponding turning-on and turning-off processing to the mobile hotspot device according to the remote control request message, herein the first connection is used as a control channel for remote control message interaction between the mobile hotspot device and the mobile terminal.

Herein, the mobile terminal includes the apparatus in the above-mentioned solution; and the mobile hotspot device includes the apparatus in the above-mentioned solution.

The method for managing the mobile hotspot provided by the embodiment of the present invention includes the following operations: the mobile hotspot device and the mobile terminal establish a first connection, herein the first connection is used as a control channel for remote control message interaction between the mobile hotspot device and the mobile terminal; the mobile terminal sends a remote control request message by using the first connection, herein the remote control request message is used for performing turning-on and turning-off processing control to the mobile hotspot device; and the mobile hotspot device receives the remote control request message through the first connection, makes a response to the remote control request message and performs corresponding turning-on and turning-off processing to the mobile hotspot device according to the remote control request message. Thereby, when the mobile terminal which surfs the Internet through the mobile hotspot is used, the mobile hotspot device does not need to be found and taken out any longer, the mobile hotspot can be remotely turned on and off in a one-stop way through the mobile smart terminal, the situation that the user needs to be frequently and manually take out and put back the mobile hotspot device in case of fragmented frequent use is avoided, and the user experience is improved.

### Brief Description of Drawings

FIG. 1 illustrates a flowchart of a method for managing a mobile hotspot provided by the embodiment of the present invention.
FIG. 2 illustrates a flowchart of another method for managing a mobile hotspot provided by the embodiment of the present invention.
FIG. 3 illustrates a flowchart of another method for managing a mobile hotspot provided by the embodiment of the present invention.
FIG. 4 illustrates a flowchart of a method for broadcasting device state information provided by the embodiment of the present invention.
FIG. 5 illustrates a flowchart of a method for receiving device state information provided by the embodiment of the present invention.
FIG. 6 illustrates a flowchart of a method for turning on a mobile hotspot provided by the embodiment of the present invention.
FIG. 7 illustrates a structural schematic diagram of an apparatus for managing a mobile hotspot provided by the embodiment of the present invention.
FIG. 8 illustrates a structural schematic diagram of another apparatus for managing a mobile hotspot provided by the embodiment of the present invention.
FIG. 9 illustrates a structural schematic diagram of a system for managing a mobile hotspot provided by the embodiment of the present invention.
FIG. 10 illustrates a structural schematic diagram of another system for managing a mobile hotspot provided by the embodiment of the present invention.

### Preferred Embodiments of the Invention

In the embodiments of the present invention, a mobile hotspot device and a mobile terminal establish the first connection, herein the first connection is used as a control channel for remote control message interaction between the mobile hotspot device and the mobile terminal. The mobile terminal sends a remote control request message by using the first connection. Herein the remote control request message is used for performing turning-on and turning-off processing control to the mobile hotspot device. The mobile hotspot device receives the remote control request message through the first connection, makes a response to the remote control request message and performs corresponding turning-on and turning-off processing to the mobile hotspot device according to the remote control request message.

The present invention will be further described below in detail with reference to the drawings and in combination with the specific embodiments.

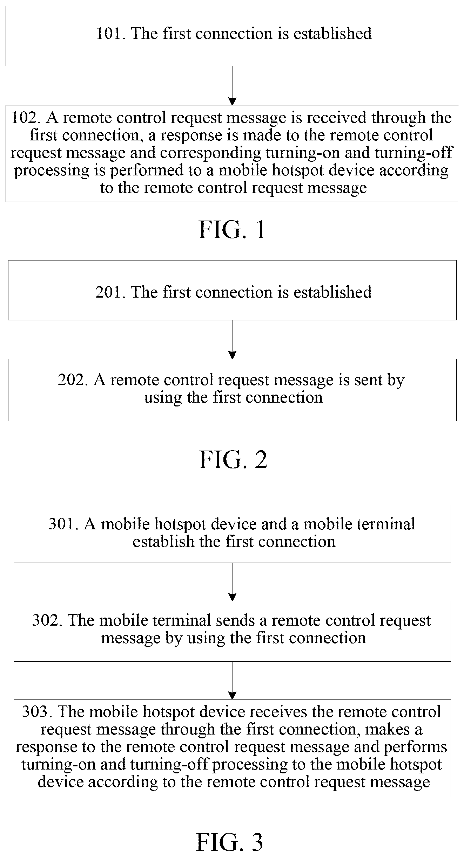

FIG. 1 illustrates a flowchart of a method for managing a mobile hotspot provided by the embodiment of the present invention. The method is applied to a mobile hotspot device which is used as a mobile hotspot. As illustrated in FIG. 1, the method includes the following steps.

In step 101, the first connection is established. Herein the first connection is used as a control channel for remote control message interaction between a mobile hotspot device and a mobile terminal.

Here, the first connection is established after the mobile hotspot device is powered on. At this moment, the established first connection is the first connection in a broadcast state. Here, a low-power-consumption wireless module for providing the first connection is added into the mobile hotspot device to provide the first connection. Herein the first connection is used as a control channel for interaction with the mobile terminal, and the first connection and the original second connection such as a local WLAN connection are two types of wireless connections which are mutually independent.

After the first connection is established, the mobile hotspot device acquires a device state of the mobile hotspot device, acquires device state information of the mobile hotspot device according to the device state and broadcasts the device state information by using the first connection.

Specifically, after the mobile hotspot device is powered on, the established first connection in the broadcast state is a one-way broadcast channel and the device state information of the mobile hotspot device is broadcast to all mobile terminals coupled to the mobile hotspot device. Here, before the device state information is broadcast to the mobile terminal, the device state of the mobile hotspot device needs to be acquired firstly and the device state of the mobile hotspot includes a working state and a turned-off state.

It needs to be stated that, when the mobile hotspot device is powered on, a main CPU of the mobile hotspot device works and the mobile hotspot device is in the working state; and when the mobile hotspot device is not powered on, the main CPU of the mobile hotspot device is turned off and the mobile hotspot device is in the turned-off state.

When the device state is the working state, the device state information is acquired on line. Herein online acquisition may be an operation of receiving an active report of the device state information or performing regular query. When the device state is the turned-off state, the stored device state information is locally acquired. Specifically, the low-power-consumption wireless module further provides a low-power-consumption CPU which is independent of the main CPU for device processing of the mobile hotspot device. The low-power-consumption CPU may perform data interaction with the main CPU. When the mobile hotspot device is in the working state, the low-power-consumption CPU interacts with the main CPU, which actively reports the device state information to the low-power-consumption CPU when the main CPU detects that the device state is changed, and the low-power-consumption CPU receives the active report of the device state information; or the low-power-consumption CPU regularly queries the main CPU about the device state information and broadcasts the device state information returned by the main CPU to mobile terminals coupled to the mobile hotspot device. Here, the period of querying about the device state information may be set by the user as needed, e.g., 1s. When the mobile hotspot device is in the turned-off state, the low-power-consumption CPU acquires the device state information locally stored in the low-power-consumption wireless module and broadcasts the device state information to the mobile terminals under the mobile hotspot device. Herein the device state information includes device state information such as powered-on identification, WLAN turned-on identification, battery information, Subscriber Identity Module (SIM) card state, mobile signal system, signal strength and information prompt (e.g., new short message, version update, etc.). The powered-on identification indicates whether the mobile hotspot device is powered on or not, the WLAN turned-on identification indicates whether the WLAN of the mobile hotspot device is in a turned-on state, the battery information indicates the current battery quantity of the mobile hotspot device, the SIM card state indicates whether an SIM card is inserted into the mobile hotspot device and the mobile signal system indicates a system which is supported by the mobile hotspot device in an uplink at current.

It needs to be stated that, after the device state information is acquired, the low-power-consumption wireless module periodically broadcasts the device state information according to the set broadcast period. Herein the broadcast period may be set by the user according to the need, e.g., 1s. The low-power-consumption wireless module may always independently work and may still perform operations such as broadcasting and receiving instructions when the main CPU of the mobile hotspot device is turned off. Herein the first connection may be a Bluetooth v4.0 low-power-consumption wireless connection.

In actual application, when a battery is inserted into the mobile hotspot device, the low-power-consumption wireless module is started.

In step 102, a remote control request message is received through the first connection, a response is made to the remote control request message and corresponding turning-on and turning-off processing is performed to the mobile hotspot device according to the remote control request message.

When the mobile hotspot device receives the remote control request message of the mobile terminal, the first connection is switched from the one-way broadcast state to a two-way data transmission state, can receive data of the mobile terminal and send data to the mobile terminal.

The remote control request message includes a hotspot turning-on request and a hotspot turning-off request. Processing performed by the mobile hotspot device is different according to different received remote control request messages. When the remote control request message is the hotspot turning-on request, the mobile hotspot device performs the function of resetting and turning on the hotspot, and returns a turning-on success response. When the remote control request message is the hotspot turning-off request, the mobile hotspot device performs the function of turning off the hotspot and returns a turning-off success response.

After the mobile hotspot device receives the remote control request message of the mobile terminal through the first connection, the low-power-consumption wireless module performs corresponding processing to the received remote control request message: if it is the hotspot turning-on request, the low-power-consumption CPU triggers the main CPU to be electrified and reset to turn on the hotspot function of the mobile hotspot device. If it is the hotspot turning-off request, the low-power-consumption CPU notifies the main CPU to turn off the hotspot function of the mobile hotspot device. After the hotspot function is turned on or off, the low-power-consumption CPU returns a request success response which is sent to the mobile terminal through the first connection.

The remote control request may further include the second connection establishment request and the second connection cutoff request. When the remote control request message is the second connection establishment request, the second connection is established. When the remote control request message is the second connection cutoff request, the second connection is cut off.

Specifically, when the remote control request message of the mobile terminal, which is received by the mobile hotspot device through the first connection, is the second connection establishment request, the low-power-consumption CPU forwards the received second connection establishment request to the main CPU, the main CPU establishes the second connection and returns an establishment success response, and the low-power-consumption CPU sends the establishment success response to the mobile terminal through the first connection. The second connection and the first connection are different connections, and the second connection is used as a data channel for data uploading or downloading between the mobile hotspot device and the mobile terminal.

When the remote control request message of the mobile terminal, which is received by the mobile hotspot device through the first connection, is the second connection cutoff request, the low-power-consumption CPU forwards the received second connection cutoff request to the main CPU, the main CPU cuts off the second connection and returns an cutoff success response, and the low-power-consumption CPU sends the cutoff success response to the mobile terminal through the first connection.

In actual application, by adopting the method for managing the mobile hotspot provided by the embodiment of the present invention, on the premise that the mobile hotspot device does not need to be found and taken out, the query and viewing of the state information of the mobile hotspot device can be completed in a one-stop way through the mobile terminal, and the operations of remotely turning on and off the mobile hotspot device can be completed, so that the situation that the user needs to frequently and manually take out and put back the mobile hotspot device in case of fragmented frequent use is avoided. Besides, by remotely controlling the establishment and cutoff of the second connection, the power consumption of the standby state of the mobile hotspot device may be reduced, the endurance time of the mobile hotspot device is increased, simultaneously the powering-on speed can be accelerated and the user experience is greatly improved.

FIG. 2 illustrates a flowchart of another method for managing a mobile hotspot provided by the embodiment of the present invention. The method is applied to a mobile terminal which is accessed to a mobile hotspot device. As illustrated in FIG. 2, the method includes the following steps.

In step 201, the first connection is established, herein the first connection is used as a control channel for remote control message interaction between a mobile terminal and a mobile hotspot device.

Here, the first connection is used as a control channel for interaction with the mobile hotspot device, and the first connection and the original second connection such as a WLAN connection are two types of wireless connections which are mutually independent. Here, the first connection may be a Bluetooth v4.0 first connection.

After the first connection is established, the broadcast of device state information of the mobile hotspot device may be monitored by using the first connection and the monitored device state information is displayed after monitoring succeeds.

Specifically, after the mobile terminal establishes the first connection, the mobile terminal monitoring periodically the broadcast of the device state information of the mobile hotspot device is periodically monitored by taking a monitoring period as a period. At this moment, the first connection is in a one-way broadcast state and the mobile terminal monitors the broadcast of the mobile hotspot device. When the device state information of the mobile hotspot device is monitored and after monitoring succeeds, the monitored device state information is displayed in a display area of the mobile terminal in a mode of a small window. Here, the displaying mode of the device state information is not limited in the embodiment of the present invention.

In actual application, when a screen lamp of the mobile terminal is off, the first connection of the mobile terminal is turned off, and when the screen lamp is on, the device state information broadcast by the mobile hotspot device is monitored again.

In step 202, a remote control request message is sent by using the first connection, herein the remote control request message is used for performing turning-on and turning-off processing control to the mobile hotspot device.

Before the remote control request message is sent, the remote control request message needs to be triggered according to a triggering policy. The remote control request message includes a hotspot turning-on request and a hotspot turning-off request. Specifically, when the mobile terminal receives an instruction of turning on the mobile hotspot device from the user or detects that the screen lamp of the display area of the mobile terminal is on, the hotspot turning-on request is triggered. When the mobile terminal receives an instruction of turning off the mobile hotspot device from the user or detects that the screen lamp of the display area of the mobile terminal is off, the hotspot turning-off request is triggered.

The remote control request may further include a second connection establishment request used for establishing the second connection and a second connection cutoff request used for cutting off the second connection. Here, the second connection and the first connection are different connections and the second connection is used as a data channel for data uploading or downloading between the mobile hotspot device and the mobile terminal.

After the remote control request message is triggered, the remote control request message is sent to the mobile hotspot device through the first connection. After a request response returned by the mobile hotspot device is received, the second connection with the mobile hotspot device is established, and data uploading or downloading is performed or is prepared for. When the mobile terminal triggers cutting off the second connection, a second connection cutoff request is sent to the mobile hotspot device to cut off the second connection with the mobile hotspot device. Here, when the mobile terminal sends the second connection cutoff request, the hotspot turning-off request may not be sent, such that the mobile hotspot device is in a hotspot standby state that the hotspot is turned on but the second connection is not established.

FIG. 3 illustrates a flowchart of another method for managing a mobile hotspot provided by the embodiment of the present invention. The method is applied to a system which includes a mobile hotspot device used as a mobile hotspot and a mobile terminal accessed to the mobile hotspot device. As illustrated in FIG. 3, the method includes the following steps.

In step 301, a mobile hotspot device and a mobile terminal establish the first connection, herein the first connection is used as a control channel for remote control message interaction between the mobile hotspot device and the mobile terminal.

Specifically, the first connection which is independent of the second connection used for performing service interaction is established between a low-power-consumption wireless module in the mobile hotspot device and the mobile terminal accessed to the mobile hotspot device, and the first connection may be a Bluetooth v4.0 first connection.

In step 302, the mobile terminal sends a remote control request message by using the first connection.

When the mobile terminal needs to remotely turn on or off the mobile hotspot device according to a triggering policy, the remote control request message for performing turning-on and turning-off processing control to the mobile hotspot device is triggered, and the triggered remote control request message is sent to the mobile hotspot device through the first connection established in step 301.

The remote control request message may further include a second connection establishment request used for establishing the second connection and a second connection cutoff request used for cutting off the second connection.

In step 303, the mobile hotspot device receives the remote control request message through the first connection, makes a response to the remote control request message and performs turning-on and turning-off processing to the mobile hotspot device according to the remote control request message.

After the mobile hotspot device receives the remote control request message sent by the mobile terminal, corresponding turning-on and turning-off processing is performed to the mobile hotspot device according to the received remote control request message. When the remote control request message is the hotspot turning-on request, resetting is performed to turn on a hotspot function and a turning-on success response is returned to the mobile terminal. When the remote control request message is the second connection establishment request, the second connection used as a data channel is established between the mobile terminal and the mobile hotspot device and is used for data uploading and downloading between the mobile hotspot device and the mobile terminal to perform service interaction. When the remote control request message is the hotspot turning-off request, the hotspot function of the mobile hotspot device is turned off and a turning-off success response is returned. When the remote control request message is the second connection cutoff request, the second connection used as the data channel between the mobile terminal and the mobile hotspot device is cut off.

In actual application, when the mobile terminal sends the hotspot turning-on request, the second connection establishment request may be simultaneously sent. When the second connection cutoff request is sent, the hotspot turning-off request may not be sent.

Here, after step 301, the mobile hotspot device broadcasts device state information of the mobile hotspot device itself by taking a broadcast period as a period through the first connection established in step 301, the mobile terminal performs monitoring by taking a monitoring period as a period, and the monitored device state information is displayed in a display area of the mobile terminal after monitoring succeeds.

Methods for broadcasting device state information, receiving device state information and turning on a mobile hotspot in the embodiments of the present invention will be further described below through specific application examples.

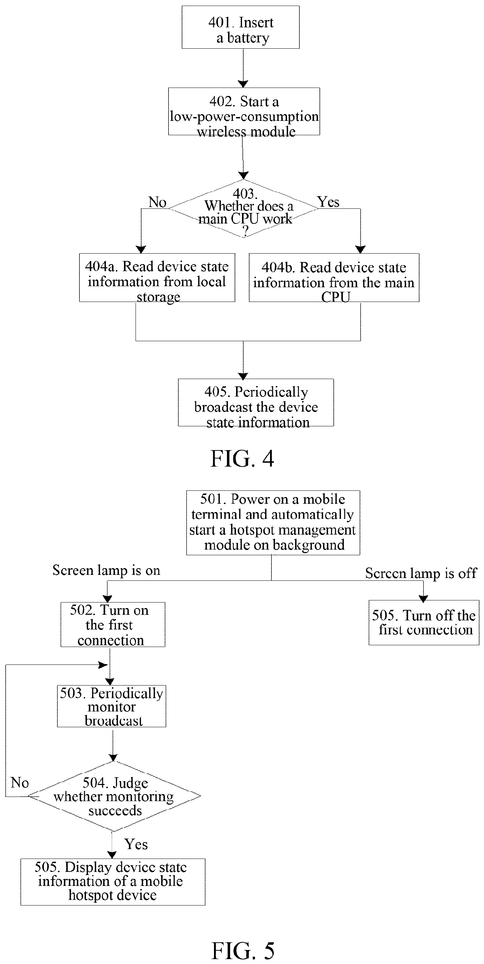

FIG. 4 illustrates a flowchart of a method for broadcasting device state information provided by the embodiment of the present invention. As illustrated in FIG. 4:In step 401, a battery is inserted.

In step 402, a low-power-consumption wireless module is started.

Here, after a battery is inserted into a mobile hotspot device, no matter whether the mobile hotspot device is powered on, a lower-power-consumption wireless module is started to start to perform low-power-consumption broadcasting of device state information.

In step 403, whether a main CPU works.

The low-power-consumption wireless module of the mobile hotspot device judges whether a main CPU works at current, and acquires a current device state which is used for indicating whether the mobile hotspot device is powered on. When the mobile hotspot device is powered on, the main CPU works, the device state is a working state and step 404b is executed. When the mobile hotspot device is not powered on, the main CPU does not work, the device state is a turned-off state and step 404a is executed.

In step 404a, device state information is read from local storage.

Specifically, when the device state is the turned-off state, the low-power-consumption CPU of the low-power-consumption wireless module of the mobile hotspot device acquires locally stored device information.

In step 404b, device state information is read from the main CPU.

Specifically, when the device state is the working state, the low-power-consumption CPU of the low-power-consumption wireless module of the mobile hotspot device acquires device state information on line from the main CPU of the mobile hotspot device, and the main CPU of the mobile hotspot device returns the device state information to the low-power-consumption CPU.

It needs to be stated that, in step 404a and step 404b, the acquired device state information includes device state information indicating whether the mobile hotspot device is powered on, whether WLAN is turned on, battery information, SIM state, mobile signal system, signal strength, information prompt (e.g., new short message, version update and the like). Herein, when a WLAN turned-on identification is 0, it indicates that the hotspot is in a turned-off state. When battery quantity is 0, it indicates that the mobile hotspot device is powered on for the first time, and in the device state information of the mobile hotspot device after being powered on thereafter, the electric quantity of the battery is the information about the electric quantity of the battery read from and stored in the CPU when the mobile hotspot device is powered on at the previous time.

In step 405, the device state information is periodically broadcast.

After the device state information is acquired, the low-power-consumption wireless module broadcasts the device state information to the mobile terminal through the first connection by taking a broadcast period as a period. Here, the broadcast period may be set according to the need, e.g., 1s.

FIG. 5 illustrates a flowchart of a method for receiving device state information provided by the embodiment of the present invention. As illustrated in FIG. 5, the method includes the following steps.

In step 501, a mobile terminal is powered on and a hotspot management module is automatically started on background.

Here, after the mobile terminal is powered on and when a user needs to perform a service, a screen lamp of the mobile terminal is on. Therefore, whether the user needs device state information broadcast by a mobile hotspot device to be monitored at current may be determined according to whether the screen lamp is on. When the screen lamp is on, step 502 is executed, and when the screen lamp is off, step 506 is executed to turn off a first connection.

In step 502, the first connection is turned on.

Here, when the screen lamp of the mobile terminal is on, the hotspot management module turns on the first connection between the mobile terminal and the mobile hotspot device.

In step 503, broadcast is periodically monitored.

At this moment, broadcast of device state information of the mobile hotspot device is monitored through the first connection by taking a monitoring period as a period, herein the monitoring period may be set according to the need of the user, e.g., 1.5s, and here, the monitoring period is greater than the broadcast period of the mobile hotspot device.

In step 504, whether monitoring succeeds is judged.

When monitoring succeeds, step 505 is executed to display the device state information of the mobile hotspot device. Specifically, the monitored device state information of the mobile hotspot device is received, the received device state information of the mobile hotspot device is displayed in a mode of a small window on a standby interface of the mobile terminal, and if monitoring does not succeed, step 503 is continuously executed to periodically monitor broadcast.

It needs to be stated that, when the screen lamp of the display area of the mobile terminal is off, the first connection of the mobile terminal is turned off, and when the screen lamp is on, the device state information broadcast by the mobile hotspot device is monitored again and received.

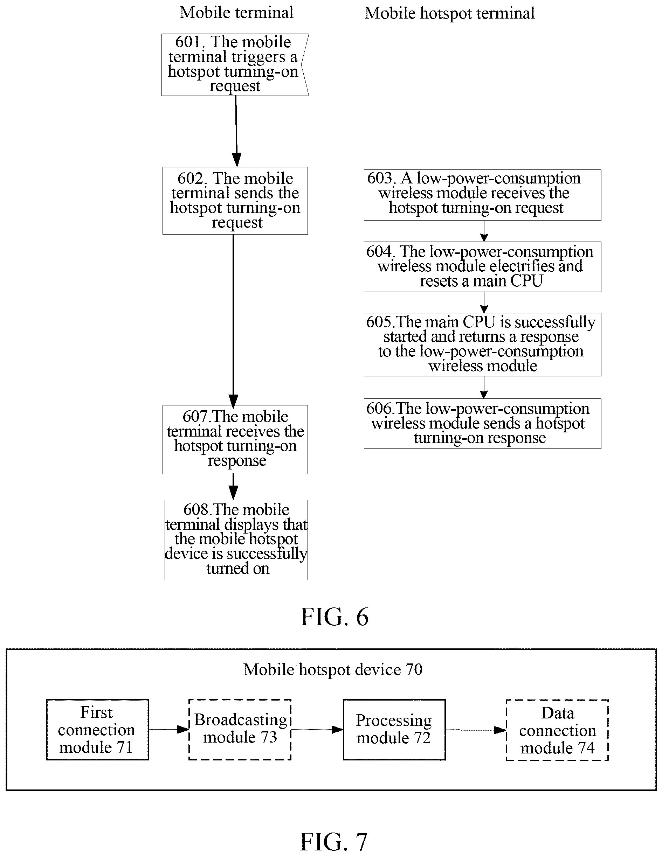

FIG. 6 describes the method provided by the embodiment of the present invention by taking turning on a hotspot function of a mobile hotspot device as an example. The mobile hotspot device broadcasts device state information thereof to a mobile terminal through the first connection. For the mobile terminal, the mobile terminal monitors the device state information broadcast by the mobile hotspot device through the first connection in a monitoring state. When the mobile terminal needs to turn on the hotspot device, steps illustrated in FIG. 6 are executed.

In step 601, a mobile terminal triggers a hotspot turning-on request.

Here, a hotspot management module of the mobile terminal may trigger the hotspot turning-on request through two working modes, i.e., a manual mode and an automatic mode. Herein in the manual mode, a triggering switch is arranged and a user manually turns on the triggering switch to trigger the hotspot turning-on request to turn on a hotspot function of the mobile hotspot device. In the automatic mode, when the hotspot management module determines that an application on the mobile terminal needs to perform service interaction with the mobile hotspot device or a screen lamp of a display area is on, the hotspot turning-on request is triggered to turn on the hotspot function of the mobile hotspot device. At this moment, the first connection between the mobile terminal and the mobile hotspot device is switched to a two-way data channel in a connection state.

In step 602, the mobile terminal sends the hotspot turning-on request.

The hotspot management module of the mobile terminal sends the hotspot turning-on request to the mobile hotspot device through the first connection in the connection state and waits for a response made by the mobile hotspot device. Here, the hotspot management module of the mobile terminal simultaneously sends a second connection establishment request.

In step 603, a low-power-consumption wireless module receives the hotspot turning-on request.

In step 604, the low-power-consumption wireless module electrifies and resets a main CPU.

Here, after the low-power-consumption wireless module of the mobile hotspot device receives the hotspot turning-on request, the low-power-consumption wireless module performs electrification and resetting operations to the main CPU of the mobile hotspot device, turns on the hotspot function of the mobile hotspot device and establishes the second connection which is independent of the first connection according to the second connection establishment request.

In step 605, the main CPU is successfully started and returns a response to the low-power-consumption wireless module.

In step 606, the low-power-consumption wireless module sends a hotspot turning-on response; and after the low-power-consumption wireless module receives the response of the main CPU, the low-power-consumption wireless module returns the hotspot turning-on response to the mobile terminal through the established first connection.

In step 607, the mobile terminal receives the hotspot turning-on response.

In step 608, the mobile terminal displays that the mobile hotspot device is successfully turned on.

After the mobile terminal receives the success response returned by the mobile hotspot device, the mobile terminal displays that the mobile hotspot device is successfully turned on, performs service interaction with the mobile hotspot device through the established second connection and performs the needed service through the mobile hotspot device.

It needs to be stated that, in steps illustrated in FIG. 6, step 601, step 602, step 607 and step 608 are executed by the mobile terminal accessed to the mobile hotspot device, while step 603, step 604, step 606 and step 606 are executed by the mobile hotspot device.

It needs to be stated that, in a process of turning off the hotspot function of the mobile hotspot device, a hotspot turning-off request may be triggered through a manual or automatic mode to enter a hotspot turning-off process. Herein, when the user manually performs a turning-off operation to a trigger switch or when the hotspot management module determines that the application on the mobile terminal does not need to perform service interaction with the mobile hotspot device and the screen lamp is off, the hotspot turning-off request is triggered.

In actual application, when the main CPU of the mobile hotspot device detects that there is no connection of the mobile terminal on the second connection in a period of time such as 1min, the second connection is automatically cut off, and after the wireless function of the mobile hotspot device is in a standby state for a period of time such as 5min, if no hotspot turning-on request is received, i.e., no hotspot turning-on operation is performed, the mobile hotspot device is turned off.

In actual application, the hotspot management module on the mobile terminal judges whether the mobile terminal needs to connect a network according to a triggering policy, the mobile hotspot device may be automatically turned on through the control channel of the first connection and thereby the user experience is further improved. Simultaneously, the hotspot management module on the mobile terminal may turn off the mobile hotspot device or cut off the second connection in time through the control channel of the first connection according to a network connection state of the mobile terminal, the power waste caused by the current simple delay mechanism is avoided and the endurance time of a terminal device is greatly prolonged.

In actual application, by adopting the special first connection which always independently works and is not turned off, management state information of the mobile hotspot device may be monitored anytime on the mobile terminal, it does not need to wait for relatively long start time of the mobile hotspot device , a Web UI login process is not needed, the mobile hotspot device is managed directly on a large screen of the mobile terminal instead of a small screen of the mobile hotspot device, and thereby the user experience is greatly improved.

As illustrated in FIG. 7, the embodiment of the present invention provides an apparatus for managing a mobile hotspot. The apparatus is applied to a mobile hotspot device 70 used as a mobile hotspot. The apparatus includes a first connection module 71 and a processing module 72, herein,
the first connection module 71 is arranged to establish a first connection, herein the first connection is used as a control channel for remote control message interaction between a mobile hotspot device and a mobile terminal; and
the processing module 72 is arranged to receive a remote control request message through the first connection, make a response to the remote control request message and perform corresponding turning-on and turning-off processing to the mobile hotspot device according to the remote control request message.

Herein, the remote control request message includes a hotspot turning-on request and a hotspot turning-off request; and correspondingly, the processing module 72 is specifically arranged to: when the remote control request message is the hotspot turning-on request, reset the mobile hotspot device to turn on a hotspot function and return a turning-on success response; and when the remote control request message is the hotspot turning-off request, turn off the hotspot function of the mobile hotspot device and return a turning-off success response.

The apparatus further includes a broadcasting module 73 arranged to acquire a device state of the mobile hotspot device; acquire device state information of the mobile hotspot device according to the device state; and broadcast the device state information by using the first connection.

The broadcasting module 73 is specifically arranged to, when the device state is a working state, acquire the device state information on line; and when the device state is a turned-off state, locally acquire the stored device state information.

The remote control request message further includes a second connection establishment request and a second connection cutoff request; and correspondingly, as illustrated in FIG. 7, the apparatus further includes a data connection module 74 arranged to, when the remote control request message is the second connection establishment request, establish a second connection; and when the remote control request message is the second connection cutoff request, cut off the second connection, herein the second connection and the first connection are different connections and the second connection is used as a data channel for data uploading or downloading between the mobile hotspot device and the mobile terminal.

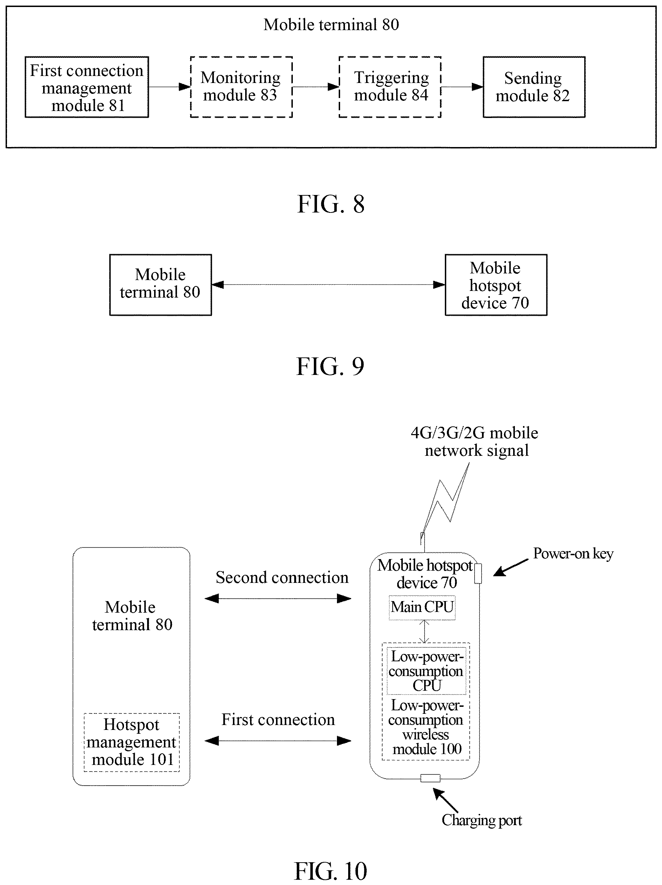

In actual application, the first connection module 71, the processing module 72 and the broadcasting module 73 illustrated in FIG. 7 may be integrated in a low-power-consumption wireless connection module 100 illustrated in FIG. 10.

As illustrated in FIG. 8, the embodiment of the present invention further provides an apparatus for managing a mobile hotspot. The apparatus is applied to a mobile terminal 80. The apparatus includes a first connection management module 81 and a sending module 82, herein,
the first connection management module 81 is arranged to establish a first connection, herein the first connection is used as a control channel for remote control message interaction between a mobile terminal and a mobile hotspot device; and
the sending module 82 is arranged to send a remote control request message by using the first connection, herein the remote control request message is used for performing turning-on and turning-off processing control to the mobile hotspot device to which the mobile terminal is accessed.

As illustrated in FIG. 8, the apparatus further includes a monitoring module 83 arranged to monitor device state information of the mobile hotspot device by using the first connection and display the monitored device state information after monitoring succeeds.

As illustrated in FIG. 8, the apparatus further includes a triggering module 84 arranged to trigger the remote control request message according to a triggering policy, herein the remote control request message includes a hotspot turning-on request and a hotspot turning-off request.

The triggering module 84 is further arranged to trigger a second connection establishment request used for establishing a second connection and a second connection cutoff request used for cutting off the second connection, herein the second connection and the first connection are different connections and the second connection is used as a data channel for data uploading or downloading between the mobile hotspot device and the mobile terminal.

In actual application, the first connection management module 81, the sending module 82, the monitoring module 83 and the triggering module 84 illustrated in FIG. 8 may be integrated in a hotspot management module 101 illustrated in FIG. 10.

As illustrated in FIG. 9, the embodiment of the present invention further provides a system for managing a mobile hotspot, including the mobile terminal 80 illustrated in FIG. 8 and the mobile hotspot device 70 illustrated in FIG. 7, herein,
the mobile terminal 80 is arranged to establish a first connection with the mobile hotspot device 70 and send a remote control request message by using the first connection, herein the remote control request message is used for performing turning-on and turning-off processing control to the mobile hotspot device 70; and
the mobile hotspot device 70 is arranged to establish the first connection with the mobile terminal 80, receive the remote control request message through the first connection, make a response to the remote control request message and perform corresponding turning-on and turning-off processing to the mobile hotspot device 70 according to the remote control request message,
herein the first connection is used as a control channel for remote control message interaction between the mobile hotspot device and the mobile terminal.

In actual application, the system provided by the embodiment of the present invention may be as illustrated in FIG. 10, a low-power-consumption wireless module 100 is added into the mobile hotspot device 70 having a power-on key and a charging port, and the low-power-consumption wireless module 100 is provided with a first connection such as a Bluetooth v4.1 low-power-consumption wireless connection as a control channel for interaction with the mobile terminal 80. The low-power-consumption wireless module 100 is further provided with a low-power-consumption CPU for interaction with a main CPU of the mobile hotspot device, acquires device state information and broadcasts the device state information to the surrounding mobile terminal 80. The low-power-consumption wireless module 100 may always independently work, and can also broadcast and receive the remote control request message to perform operations when the main CPU of the mobile hotspot device is turned off.

For the mobile terminal 80 which performs service interaction through the mobile hotspot device 70, a corresponding hotspot management module 101 is deployed. The mobile terminal 80 turns on and off the hotspot function of the mobile hotspot device 70 by performing information interaction with the mobile hotspot device 70 through the corresponding first connection such as the Bluetooth v4.0 low-power-consumption wireless connection on the mobile hotspot device 70, herein, after the hotspot function of the mobile hotspot device 70 is turned on, the uplink 4G/3G/2G wireless connection and the downlink second connection work at the same time.

In actual application, the apparatus or system apparatus provided by the present invention may be used as a separate system and may also be the existing terminal such as a mobile phone added with logic units for realizing different functions.

When logic units are added into the mobile phone, the first connection module 71, the processing module 72, the broadcasting module 73 and the data connection module 74 may be implemented through a Central Processing Unit (CPU), a Digital Signal Processor (DSP) or a Field Programmable Gate Array (FPGA) in the mobile phone.

When logic units are added into the mobile phone, the first connection management module 81, the sending module 82, the monitoring module 83 and the triggering module 84 may be implemented through a CPU, a DSP or a FPGA in the mobile phone.

The embodiments described above are just preferred embodiments of the present invention and are not used for limiting the protection scope of the present invention.

### Industrial Applicability

The method for managing the mobile hotspot provided by the embodiment of the present invention includes the following operations: the mobile hotspot device and the mobile terminal establish a first connection, herein the first connection is used as a control channel for remote control message interaction between the mobile hotspot device and the mobile terminal; the mobile terminal sends a remote control request message by using the first connection, herein the remote control request message is used for performing turning-on and turning-off processing control to the mobile hotspot device; and the mobile hotspot device receives the remote control request message through the first connection, makes a response to the remote control request message and performs corresponding turning-on and turning-off processing to the mobile hotspot device according to the remote control request message. Thereby, when the mobile terminal which surfs the Internet through the mobile hotspot is used, the mobile hotspot device does not need to be found and taken out any longer, the mobile hotspot can be remotely turned on and off in a one-stop way through the mobile smart terminal, the situation that the user needs to be frequently and manually take out and put back the mobile hotspot device in case of fragmented frequent use is avoided, and the user experience is improved.

## Claims

1. A method for managing a mobile hotspot, comprising:
establishing a first connection, wherein the first connection is used as a control channel for remote control message interaction between a mobile hotspot device and a mobile terminal; and
receiving a remote control request message through the first connection, making a response to the remote control request message and performing corresponding turning-on and turning-off processing to the mobile hotspot device according to the remote control request message.

2. The method according to claim 1, wherein the method further comprises:
acquiring a device state of the mobile hotspot device; acquiring device state information of the mobile hotspot device according to the device state; and
broadcasting the device state information by using the first connection.

3. The method according to claim 2, wherein acquiring the device state information of the mobile hotspot device according to the device state comprises:
when the device state is a working state, acquiring the device state information on line; and
when the device state is a turned-off state, locally acquiring stored the device state information.

4. The method according to claim 1, wherein the remote control request message comprises:
a hotspot turning-on request and a hotspot turning-off request; and correspondingly,
performing turning-on and turning-off processing to the mobile hotspot device according to the remote control request message comprises:
when the remote control request message is the hotspot turning-on request, resetting the mobile hotspot device to turn on a hotspot function and returning a turning-on success response; and
when the remote control request message is the hotspot turning-off request, turn off the hotspot function of the mobile hotspot device and returning a turning-off success response.

5. The method according to claim 1, wherein the remote control request message further comprises: a second connection establishment request and a second connection cutoff request; and correspondingly, the method further comprises:
when the remote control request message is the second connection establishment request, establishing a second connection; and
when the remote control request message is the second connection cutoff request, cutting off the second connection,
wherein the second connection and the first connection are different connections, the second connection is used as a data channel for data uploading or downloading between the mobile hotspot device and the mobile terminal.

6. A method for managing a mobile hotspot, comprising:
establishing a first connection, wherein the first connection is used as a control channel for remote control message interaction between a mobile terminal and a mobile hotspot device; and
sending a remote control request message by using the first connection, wherein the remote control request message is used for performing turning-on and turning-off processing control to the mobile hotspot device.

7. The method according to claim 6, wherein the method further comprises: monitoring device state information of the mobile hotspot device by using the first connection and displaying monitored the device state information after monitoring succeeds.

8. The method according to claim 7, wherein the method further comprises:
triggering the remote control request message according to a triggering policy, wherein the remote control request message comprises: a hotspot turning-on request and a hotspot turning-off request.

9. The method according to claim 8, wherein the remote control request further comprises a second connection establishment request used for establishing a second connection and a second connection cutoff request used for cutting off the second connection,
wherein the second connection and the first connection are different connections and the second connection is used as a data channel for data uploading or downloading between the mobile hotspot device and the mobile terminal.

10. A method for managing a mobile hotspot, comprising:
a mobile hotspot device and a mobile terminal establishing a first connection, wherein the first connection is used as a control channel for remote control message interaction between the mobile hotspot device and the mobile terminal;
the mobile terminal sending a remote control request message by using the first connection, wherein the remote control request message is used for performing turning-on and turning-off processing control to the mobile hotspot device; and
the mobile hotspot device receiving the remote control request message through the first connection, making a response to the remote control request message and performing corresponding turning-on and turning-off processing to the mobile hotspot device according to the remote control request message.

11. An apparatus for managing a mobile hotspot, comprising: a first connection module and a processing module, wherein,
the first connection module is arranged to establish a first connection, wherein the first connection is used as a control channel for remote control message interaction between a mobile hotspot device and a mobile terminal; and
the processing module is arranged to receive a remote control request message through the first connection, make a response to the remote control request message and perform corresponding turning-on and turning-off processing to the mobile hotspot device according to the remote control request message.

12. The apparatus according to claim 11, wherein the apparatus further comprises: a broadcasting module arranged to acquire a device state of the mobile hotspot device, acquire device state information of the mobile hotspot device according to the device state, and broadcast the device state information by using the first connection.

13. The apparatus according to claim 12, wherein the broadcasting module is arranged to:
when the device state is a working state, acquire the device state information on line; and
when the device state is a turned-off state, locally acquire stored the device state information.

14. The apparatus according to claim 11, wherein the remote control request message comprises: a hotspot turning-on request and a hotspot turning-off request; and correspondingly, the processing module is arranged to:
when the remote control request message is the hotspot turning-on request, reset the mobile hotspot device to turn on a hotspot function and return a turning-on success response; and
when the remote control request message is the hotspot turning-off request, turn off the hotspot function of the mobile hotspot device and return a turning-off success response.

15. The apparatus according to claim 11, wherein the remote control request message comprises: a second connection establishment request and a second connection cutoff request; and correspondingly, the apparatus further comprises:
a data connection module arranged to, when the remote control request message is the second connection establishment request, establish a second connection; and when the remote control request message is the second connection cutoff request, cut off the second connection,
wherein the second connection and the first connection are different connections and the second connection is used as a data channel for data uploading or downloading between the mobile hotspot device and the mobile terminal.

16. An apparatus for managing a mobile hotspot, comprising: a first connection management module and a sending module, wherein,
the first connection management module is arranged to establish a first connection, wherein the first connection is used as a control channel for remote control message interaction between a mobile terminal and a mobile hotspot device; and
the sending module is arranged to send a remote control request message by using the first connection, wherein the remote control request message is used for performing turning-on and turning-off processing control to the mobile hotspot device.

17. The apparatus according to claim 16, wherein the apparatus further comprises: a monitoring module arranged to monitor device state information of the mobile hotspot device by using the first connection and display monitored the device state information after monitoring succeeds.

18. The apparatus according to claim 17, wherein the apparatus further comprises: a triggering module arranged to trigger the remote control request message according to a triggering policy, wherein the remote control request message comprises: a hotspot turning-on request and a hotspot turning-off request.

19. The apparatus according to claim 18, wherein the triggering module is further arranged to trigger a second connection establishment request used for establishing a second connection and a second connection cutoff request used for cutting off the second connection, wherein the second connection and the first connection are different connections and the second connection is used as a data channel for data uploading or downloading between the mobile hotspot device and the mobile terminal.

20. A system for managing a mobile hotspot, comprising a mobile terminal and a mobile hotspot device, wherein,
the mobile terminal is arranged to establish a first connection with the mobile hotspot device and send a remote control request message by using the first connection, wherein the remote control request message is used for performing turning-on and turning-off processing control to the mobile hotspot device; and
the mobile hotspot device is arranged to establish the first connection with the mobile terminal, receive the remote control request message through the first connection, make a response to the remote control request message and perform corresponding turning-on and turning-off processing to the mobile hotspot device according to the remote control request message,
wherein the first connection is used as a control channel for remote control message interaction between the mobile hotspot device and the mobile terminal.

21. The system according to claim 20, wherein the mobile terminal comprises the apparatus according to any one of claims 17-19; and
the mobile hotspot device comprises the apparatus according to any one of claims 12-15.
